# EUROPEAN PATENT APPLICATION

(11) **EP 3 249 016 A1**
(43) Date of publication of application: **29.11.2017**
(21) Application number: 16739904.7
(22) Date of filing: 12.01.2016
(51) Int. Cl.: C08L 83/08, C08G 59/66, C08G 75/04, C08K 5/103, C08K 5/17, C08K 5/20, C08L 83/07, C09D 4/02, C09D 163/00, C09D 183/05, C09D 183/06, C09D 183/07, C09D 183/08

(54) **CURABLE ORGANOPOLYSILOXANE COMPOSITION, CURED PRODUCT THEREOF, AND CURED FILM FORMATION METHOD**

(30) Priority: 22.01.2015 JP 2015010724
(71) Applicant: Dow Corning Toray Co., Ltd., Tokyo 100-0004 (JP)
(72) Inventor: OGAWA, Takuya, Ichihara-shi Chiba 299-0108 (JP); ONODERA, Satoshi, Ichihara-shi Chiba 299-0108 (JP)
(74) Representative: Murgitroyd & Company
(86) International application number: PCT/JP2016/000099
(87) International publication number: WO 2016/117292

(57) **Abstract**

A curable organopolysiloxane composition comprising: (A) a mercapto group-containing organopolysiloxane; (B) a compound containing in a molecule at least two groups that are at least one type of functional groups selected from a group consisting of acryloyl groups, methacryloyl groups, and epoxy groups; and (C) an amine compound that does not have a N-H bond and/or a phosphine compound that does not have a P-H bond. The composition has favorable curability even at a relatively low temperature, and forms a cured film with excellent bonding with regard to an article to be coated.

## Description

### TECHNICAL FIELD

The present invention relates to a curable organopolysiloxane composition, cured product thereof, and a method of forming a cured film using the composition.

### BACKGROUND ART

Curable organopolysiloxane compositions are cured to form cured products with excellent adhesion, bonding, weather resistance, and electrical properties, and therefore, the compositions are used in adhesives, sealing agents, coating agents, and the like for electrical and/or electronic parts. For example, Patent Document 1 proposes a paint composition comprising: a mercapto group-containing organopolysiloxane obtained by a hydrolysis and condensation reaction between a mercaptoalkyl alkoxysilane and other organoalkoxysilane, and an epoxy resin having at least two epoxy groups in a molecule; and Patent Document 2 proposes a paint composition comprising: an organosilane having a silicon atom-bonded hydroxyl group and/or silicon atom-bonded alkoxy group, and/or a condensation product thereof; an addition reaction product between a polyfunctional (meth)acrylic monomer, or a (meth)acrylic group-containing alkoxysilane and/or a condensation product thereof, and a mercapto group-containing alkoxysilane and/or a condensation product thereof; an epoxy group-containing compound, and a curing catalyst.

However, curing of the paint composition does advance at room temperature, but there is a problem where the curing rate thereof is slow. Therefore, a curable organopolysiloxane composition having favorable curability even at a relatively low temperature of 30 °C or lower is required, in consideration of outdoor use during winter.

### PRIOR ART DOCUMENTS

### Patent Documents

Patent Document 1: Japanese Unexamined Patent Application Publication No. 2003-049118
Patent Document 2: Japanese Unexamined Patent Application Publication No. 2013-095773

### OVERVIEW OF THE INVENTION

### Problem to be Solved by the Invention

An object of the present invention is to provide: a curable organopolysiloxane composition having favorable curability even at a relatively low temperature of 30 °C or lower, and that can form a cured film with excellent bonding with regard to an article to be coated; and a cured product with excellent bonding with regard to an article to be coated. Furthermore, another object of the present invention is to provide a method of forming a cured film at a relatively low temperature.

### SUMMARY OF THE INVENTION

A curable organopolysiloxane composition of the present invention comprises:
(A) a mercapto group-containing organopolysiloxane represented by the average composition formula:

   XₐR¹_{b}SiO_{(4-a-b)/2}

   wherein, X represents at least one mercapto group selected from a group consisting of mercaptoalkyl groups and mercaptoaryl groups; R¹ represents a hydrogen atom, an alkyl group with 1 to 12 carbon atoms, an alkenyl group with 2 to 12 carbon atoms, an aryl group with 6 to 20 carbon atoms, an aralkyl group with 7 to 20 carbon atoms, a hydroxyl group, or an alkoxy group with 1 to 6 carbon atoms, however, at least two X are present in a molecule; and "a" and "b" are numbers satisfying: 0 < a < 1, 0 < b < 3, and 0.8 < a + b < 3;
(B) a compound in a molecule having at least two functional groups which are at least one type of groups selected from a group consisting of acryloyl groups, methacryloyl groups, and epoxy groups, wherein the compound is at least one type of compound selected from a group consisting of the following components (B1) through (B4):
   (B1) an organopolysiloxane represented by the average composition formula:

      Y_{c}R²_{d}SiO_{(4-c-d)/2}

      wherein, Y represents at least one group selected from a group consisting of acryloxyalkyl groups and methacryloxyalkyl groups; R² represents a hydrogen atom, an alkyl group with 1 to 12 carbon atoms, an alkenyl group with 2 to 12 carbon atoms, an aryl group with 6 to 20 carbon atoms, an aralkyl group with 7 to 20 carbon atoms, a hydroxyl group, or an alkoxy group with 1 to 6 carbon atoms, however, at least two Y are present in a molecule; and "c" and "d" are numbers satisfying: 0 < c < 1, 0 < d < 3, and 0.8 < c + d < 3,
   (B2) a non-siloxane compound containing in a molecule at least two gourps that are at least one type of groups selected from a group consisting of acryloyl groups and methacryloyl groups,
   (B3) a non-siloxane compound containing in a molecule at least two epoxy groups, and
   (B4) a compound having in a molecule an epoxy group and at least one group selected from a group consisting of acryloyl groups and methacryloyl groups,
   in an amount such that the functional groups in component (B) is 0.3 to 3 mols with regard to 1 mol of the mercapto groups in component (A); and
(C) an amine compound that does not contain a N-H bond and/or a phosphine compound that does not have a P-H bond, in an amount of 0.01 to 10 mass% with regard to the total amount of components (A) through (C).

A cured product of the present invention is obtained by curing the aforementioned curable organopolysiloxane composition.

A method of forming a cured film of the present invention comprises a step of coating the aforementioned curable organopolysiloxane composition on an article to be coated, and then curing at -5 to 30 °C.

### ADVANTAGEOUS EFFECTS OF THE INVENTION

The curable organopolysiloxane composition of the present invention has favorable curability at a relatively low temperature, and can form a cured film with excellent bonding to an article to be coated. Furthermore, the method of forming a cured film of the present invention can quickly cure the curable organopolysiloxane composition at a relatively low temperature.

### DESCRIPTION OF EMBODIMENTS

Hereinafter, the curable organopolysiloxane composition of the present invention will be described in detail.

The mercapto group-containing organopolysiloxane for component (A) is a base compound of the present composition, and is represented by the average composition formula:

XₐR¹_{b}SiO_{(4-a-b)/2}.

In the formula, X represents at least one type of mercapto group selected from the group consisting of mercaptoalkyl groups and mercaptoaryl groups. Examples of mercaptoalkyl groups include 3-mercaptopropyl groups, 4-mercaptobutyl groups, and 6-mercaptohexyl groups. Furthermore, examples of the mercaptoaryl include 4-mercaptophenyl groups, 4-mercaptomethyl phenyl groups, and 4-(2-mercaptoethyl) phenyl groups. Component (A) has at least two mercapto groups (X) in a molecule.

Furthermore, in the formula, R¹ represents a hydrogen atom, an alkyl group with 1 to 12 carbon atoms, an alkenyl group with 2 to 12 carbon atoms, an aryl group with 6 to 20 carbon atoms, an aralkyl group with 7 to 20 carbon atoms, a hydroxyl group, or an alkoxy group with 1 to 6 carbon atoms. Examples of the alkyl group include methyl groups, ethyl groups, propyl groups, butyl groups, pentyl groups, hexyl groups, heptyl groups, octyl groups, nonyl groups, decyl groups, undecyl groups, and dodecyl groups, but methyl groups are preferred from the perspective of economic efficiency and heat resistance. Furthermore, examples of the alkenyl group include vinyl groups, allyl groups, butenyl groups, pentenyl groups, hexenyl groups, heptenyl groups, octenyl groups, nonenyl groups, decenyl groups, undecenyl groups, and dodecenyl groups, but vinyl groups, allyl groups, hexenyl groups, or octenyl groups are preferred from the perspective of economic efficiency and reactivity. Furthermore, examples of the aryl group include phenyl groups, tolyl groups, xylyl groups, naphthyl groups, biphenyl groups, and phenoxyphenyl groups, but phenyl group, tolyl groups, or naphthyl groups are preferred from the perspective of economic efficiency. In particular, the aryl group, and particularly phenyl group is introduced into the organopolysiloxane for component (A), and therefore, the compatibility with component (B) tends to improve and the weather resistance of the obtained cured product tends to improve. Furthermore, examples of the aralkyl group include benzyl groups, phenethyl groups, and methylphenyl methyl groups. Furthermore, examples also include groups in which a portion or all hydrogen atoms bonded to the alkyl groups, alkenyl groups, or aralkyl groups are substituted with a chlorine atom, bromine atom, or other halogen atom. Furthermore, examples of the alkoxy group include methoxy groups, ethoxy groups, n-propoxy groups, i-propoxy groups, n-butoxy groups, sec-butoxy groups, and tert-butoxy groups. R¹ may also have two or more types of these groups.

Furthermore, in the formula, "a" represents a number that expresses the ratio of the mercapto groups (X) with regard to silicon atoms, and satisfies 0 < a < 1, and preferably 0 < a ≤ 0.6, or 0 < a ≤ 0.4. Furthermore, in the formula, "b" represents a number that expresses the ratio of the hydrogen atom, alkyl group with 1 to 12 carbon atoms, alkenyl group with 2 to 12 carbon atoms, aryl group with 6 to 20 carbon atoms, aralkyl group with 7 to 20 carbon atoms, hydroxyl group, or alkoxy group with 1 to 6 carbon atoms with regard to silicon atoms, and satisfies 0 < b < 3. However, the total of "a" and "b" is a number that satisfies 0.8 < a + b < 3, and preferably 1 < a + b ≤ 2.2, or 1 < a + b ≤ 2.0. This is because when "a" is a number within the aforementioned range, curability of the obtained curable organopolysiloxane composition at a relatively low temperature is favorable, and the mechanical strength of the obtained cured product is favorable. Furthermore, this is because when "b" is within the aforementioned range, the mechanical strength of the obtained cured product is enhanced. On the other hand, this is because when the total amount of a + b is a number within the aforementioned range, curability of the obtained curable organopolysiloxane composition at a relatively low temperature is favorable, and the mechanical strength of the obtained cured product is favorable.

The molecular weight of component (A) is not particularly restricted, and the weight average molecular weight as measured by gel permeation chromatography is preferably 1,000 or more and 50,000 or less. This is because when the weight average molecular weight of component (A) is equal to or greater than the lower limit of the aforementioned range, the mechanical properties of the obtained cured product are favorable, but on the other hand, when equal to or less than the upper limit of the aforementioned range, the curing rate of the obtained curable organopolysiloxane composition is enhanced.

Examples of component (A) include organopolysiloxanes as expressed by the following average unit formulas. Note that in the formulas, Me, Ph, Vi, and Thi respectively represent a methyl group, phenyl group, vinyl group, and 3-mercaptopropyl group; x1, x2, x3, and x4 represent a positive number; and the total amount of x1, x2, x3, and x4 is 1 in a molecule.

(Me₃SiO_{1/2})ₓ₁(Me₂SiO_{2/2})ₓ₂(MeThiSiO_{2/2})ₓ₃(PhSiO_{3/2})ₓ₄

(Me₂ViSiO_{1/2})ₓ₁(Me₂SiO_{2/2})ₓ₂(MeThiSiO_{2/2})ₓ₃(PhSiO_{3/2})ₓ₄

(Me₃SiO_{1/2})ₓ(Me₂SiO_{2/2})ₓ₂(MeThiSiO_{2/2})ₓ₃(MeSiO_{3/2})ₓ₄

(Me₃SiO_{1/2})ₓ₁(MeThiSiO_{2/2})ₓ₂(PhSiO_{3/2})ₓ₃

(Me₃SiO_{1/2})ₓ₁(MeThiSiO_{2/2})ₓ₂(MeSiO_{3/2})ₓ₃(PhSiO_{3/2})ₓ₄

(Me₃SiO_{1/2})ₓ₁(Me₂SiO_{2/2})ₓ₂(MeThiSiO_{2/2})ₓ₃

(Me₃SiO_{1/2})ₓ₁(Me₂SiO_{2/2})ₓ₂(MePhSiO_{2/2})ₓ₃(MeThiSiO_{2/2})ₓ₄

(Me₃SiO_{1/2})ₓ₁(MePhSiO_{2/2})ₓ₂(MeThiSiO_{2/2})ₓ₃

(Me₃SiO_{1/2})ₓ₁(Ph₂SiO_{2/2})ₓ₂(MeThiSiO_{2/2})ₓ₃

(Me₂SiO_{2/2})ₓ₁(MeThiSiO_{2/2})ₓ₂(PhSiO_{3/2})ₓ₃

(Me₂SiO_{2/2})ₓ₁(ThiSiO_{3/2})ₓ₂

(Me₃SiO_{1/2})ₓ₁(Me₂SiO_{2/2})ₓ₂(ThiSiO_{3/2})ₓ₃(MeSiO_{3/2})ₓ₄

(Me₃SiO_{1/2})ₓ₁(Me₂SiO_{2/2})ₓ₂(ThiSiO_{3/2})ₓ₃(PhSiO_{3/2})ₓ₄

(Me₃SiO_{1/2})ₓ₁(ThiSiO_{3/2})ₓ₂(MeSiO_{3/2})ₓ₃

(Me₃SiO_{1/2})ₓ₁(ThiSiO_{3/2})ₓ₂(PhSiO_{3/2})ₓ₃

(Me₂ViSiO_{1/2})ₓ₁(ThiSiO_{3/2})ₓ₂(PhSiO_{3/2})ₓ₃

(Me₃SiO_{1/2})ₓ₁(ThiSiO_{3/2})ₓ₂

(Me₂ViSiO_{1/2})ₓ₁(ThiSiO_{3/2})ₓ₂

(Me₃SiO_{1/2})ₓ₁(Me₂SiO_{2/2})ₓ₂(MeThiSiO_{2/2})ₓ₃ (SiO_{4/2})ₓ₄

(Me₃SiO_{1/2})ₓ₁(MeThiS iO_{2/2})ₓ₂(SiO_{4/2})ₓ₃

(Me₃SiO_{1/2})ₓ₁(Me₂SiO_{2/2})ₓ₂(ThiSiO_{3/2})ₓ₃(SiO_{4/2})ₓ₄

Component (A) may be one type of organopolysiloxane or may be a mixture of at least two types of organopolysiloxanes. When the component is a mixture of at least two types of the organopolysiloxane, the mixture may be expressed by the aforementioned average composition formulas.

The compound for component (B) is a component for curing the present composition by reacting with the mercapto groups in component (A). Component (B) is a compound having in a molecule at least two functional groups, wherein the groups are at least one type of groups selected from a group consisting of acryloyl groups, methacryloyl groups, and epoxy groups, and wherein the compound is at least one type of compound selected from a group consisting of the aforementioned components (B1) through (B4).

Component (B1) is an organopolysiloxane represented by the average composition formula:

Y_{c}R²_{d}SiO_{(4-c-d)/2}.

In the formula, Y represents at least one type of group selected from a group consisting of acryloxyalkyl groups and methacryloxyalkyl groups. Examples of the acryloxyalkyl groups include 3-acryloxypropyl groups, 4-acryloxybutyl groups, and 6-acryloxyhexyl groups. Furthermore, examples of the methacryloxyalkyl groups include 3-methacryloxypropyl groups and 4-methyacyloxybutyl groups. Component (B1) has at least two groups (Y) in a molecule.

Furthermore, in the formula, R² represents a hydrogen atom, an alkyl group with 1 to 12 carbon atoms, an alkenyl group with 2 to 12 carbon atoms, an aryl group with 6 to 20 carbon atoms, an aralkyl group with 7 to 20 carbon atoms, a hydroxyl group, or an alkoxy group with 1 to 6 carbon atoms. Examples of the alkyl group include methyl groups, ethyl groups, propyl groups, butyl groups, pentyl groups, hexyl groups, heptyl groups, octyl groups, nonyl groups, decyl groups, undecyl groups, and dodecyl groups, but methyl groups are preferred from the perspective of economic efficiency and heat resistance. Furthermore, examples of the alkenyl group include vinyl groups, allyl groups, butenyl groups, pentenyl groups, hexenyl groups, heptenyl groups, octenyl groups, nonenyl groups, decenyl groups, undecenyl groups, and dodecenyl groups, but vinyl groups, allyl groups, hexenyl groups, or octenyl groups are preferred from the perspective of economic efficiency and reactivity. Furthermore, examples of the aryl group include phenyl groups, tolyl groups, xylyl groups, naphthyl groups, biphenyl groups, and phenoxyphenyl groups, but phenyl group, tolyl groups, or naphthyl groups are preferred from the perspective of economic efficiency. In particular, the aryl group, and particularly phenyl group is introduced into the organopolysiloxane for component (B1), and therefore, the weather resistance of the obtained cured product tends to improve. Furthermore, examples of the aralkyl group include benzyl groups, phenethyl groups, and methylphenyl methyl groups. Furthermore, examples also include groups in which a portion or all hydrogen atoms bonded to the alkyl groups, alkenyl groups, or aralkyl groups are substituted with a chlorine atom, bromine atom, or other halogen atom. Furthermore, examples of the alkoxy group include methoxy groups, ethoxy groups, n-propoxy groups, i-propoxy groups, n-butoxy groups, sec-butoxy groups, and tert-butoxy groups. R² may also have two or more types of these groups.

Furthermore, in the formula, "c" represents a number that expresses the ratio of group (Y) with regard to silicon atoms, and satisfies 0 < c < 1, and preferably 0 < c ≤ 0.6, or 0 < c ≤ 0.4. Furthermore, in the formula, "d" represents a number that expresses the ratio of the hydrogen atom, alkyl group with 1 to 12 carbon atoms, alkenyl group with 2 to 12 carbon atoms, aryl group with 6 to 20 carbon atoms, aralkyl group with 7 to 20 carbon atoms, hydroxyl group, or alkoxy group with 1 to 6 carbon atoms to silicon atoms, and satisfies 0 < d < 3. However, the total of "a" and "b" is a number that satisfies 0.8 < c + d < 3, and preferably 1 < c + d ≤ 2.2, or 1 < c + d ≤ 2.0. This is because when "c" is a number within the aforementioned range, curability of the obtained curable organopolysiloxane composition at a relatively low temperature is favorable, and the mechanical strength of the obtained cured product is favorable. Furthermore, this is because when "d" is within the aforementioned range, the mechanical strength of the obtained cured product is enhanced. On the other hand, this is because when the total amount of c + d is a number within the aforementioned range, curability of the obtained curable organopolysiloxane composition at a relatively low temperature is favorable, and the mechanical strength of the obtained cured product is favorable.

The molecular weight of component (B1) is not particularly restricted, and the weight average molecular weight as measured by gel permeation chromatography is preferably 1,000 or more and 50,000 or less. This is because when the weight average molecular weight of component (B1) is equal to or greater than the lower limit of the aforementioned range, the mechanical properties of the obtained cured product are favorable, and on the other hand, when equal to or less than the upper limit of the aforementioned range, the curing rate of the obtained curable organopolysiloxane composition is enhanced.

Examples of component (B1) include organopolysiloxanes as expressed by the following average unit formulas. Note that in the formulas, Me, Ph, Vi, and Ac respectively represent a methyl group, phenyl group, vinyl group, and 3-acryloxypropyl group; y1, y2, y3, and y4 represent a positive number; and the total amount of y1, y2, y3, and y4 is 1 in a molecule.

(Me₃SiO_{1/2})_{y1}(Me₂SiO_{2/2})_{y2}(MeAcSiO_{2/2})_{y3}(PhSiO_{3/2})_{y4}

(Me₂ViSiO_{1/2})_{y1}(Me₂SiO_{2/2})_{y2}(MeAcSiO_{2/2})_{y3} (PhSiO_{3/2})_{y4}

(Me₃SiO_{1/2})_{y1}(Me₂SiO_{2/2})_{y2}(MeAcSiO_{2/2})_{y3}(MeSiO_{3/2})_{y4}

(Me₃SiO_{1/2})_{y1}(MeAcSiO_{2/2})_{y2}(PhSiO_{3/2})_{y3}

1(Me₃SiO_{1/2})_{y1}(MeAcSiO_{2/2})_{y2}(MeSiO_{3/2})_{y3}(PhSiO_{3/2})_{y4}

(Me₃SiO_{1/2})_{y1}(Me₂SiO_{2/2})_{y2}(MeAcSiO_{2/2})_{y3}

(Me₃SiO_{1/2})_{y1}(Me₂SiO_{2/2})_{y2}(MePhSiO_{2/2})_{y3}(MeAcSiO_{2/2})_{y4}

(Me₃SiO_{1/2})_{y1}(MePhSiO_{2/2})_{y2}(MeAcSiO_{2/2})_{y3}

(Me₃SiO_{1/2})_{y1}(Ph₂SiO_{2/2})_{y2}(MeAcSiO_{2/2})_{y3}

(Me₂SiO_{2/2})_{y1}(MeAcSiO_{2/2})_{y2}(PhSiO_{3/2})_{y3}

(MeAcSiO_{2/2})_{y1}(PhSiO_{3/2})_{y2}

(Me₂SiO_{2/2})_{y1}(AcSiO_{3/2})_{y2}

(Me₃SiO_{1/2})_{y1}(Me₂SiO_{2/2})_{y2}(AcSiO_{3/2})_{y3}(MeSiO_{3/2})_{y4}

(Me₃SiO_{1/2})_{y1}(Me₂SiO_{2/2})_{y2}(AcSiO_{3/2})_{y3}(PhSiO_{3/2})_{y4}

(Me₃SiO_{1/2})_{y1}(AcSiO_{3/2})_{y2}(MeSiO_{3/2})_{y3}

(Me₃SiO_{1/2})_{y1}(AcSiO_{3/2})_{y2}(PhSiO_{3/2})_{y3}

(Me₂ViSiO_{1/2})_{y1}(AcSiO_{3/2})_{y2}(PhSiO_{3/2})_{y3}

(Me₃SiO_{1/2})_{y1}(AcSiO_{3/2})_{y2}

(Me₂ViSiO_{1/2})_{y1}(AcSiO_{3/2})_{y2}

(Me₃SiO_{1/2})_{y1}(Me₂SiO_{2/2})_{y2}(MeAcSiO_{2/2})_{y3}(SiO_{4/2})_{y4}

(Me₃SiO_{1/2})_{y1}(MeAcSiO_{2/2})_{y2}(SiO_{4/2})_{y3}

(Me₃SiO_{1/2})_{y1}(Me₂SiO_{2/2})_{y2}(AcSiO_{3/2})_{y3}(SiO_{4/2})_{y4}

Component (B1) may be one type of organopolysiloxane or may be a mixture of at least two types of organopolysiloxanes. When the component is a mixture of at least two types of the organopolysiloxane, the mixture may be expressed by the aforementioned average composition formulas.

Component (B2) is a non-siloxane compound containing in a molecule at least two groups which are at least one type of group selected from a group consisting of acryloyl groups and methacryloyl groups. Note that the non-siloxane compound refers to a compound that does not have a siloxane bond (Si-O-Si) in a molecule, and specifically refers to a compound other than an organopolysiloxane containing an acryloyl group and/or methacryloyl group. The molecular weight of component (B2) is not particularly restricted, and is preferably within a range of 200 to 2,000, within a range of 200 to 1,500, or within a range of 300 to 1,500. This is because when the molecular weight of component (B2) is equal to or greater than the lower limit of the aforementioned range, the volatility of component (B2) is reduced, and problems with odor are reduced, and on the other hand, when equal to or less than the upper limit of the aforementioned range, compatibility with regard to component (A) is enhanced.

Examples of component (B2) include: 1,4-butanediol diacrylate, 1,6-hexanediol diacrylate, 1,9-nonanediol diacrylate, 1,10-decanediol diacrylate, dipropylene glycol diacrylate, tripropylene glycol diacrylate, polypropylene glycol diacrylate, tetraethylene glycol diacrylate, polyethylene glycol diacrylate, and other both terminated diol diacrylates; bisphenol A glycidily ether acrylate adduct and other diglycidyl ether acrylate adduct; bisphenol A ethylene glycol adduct diacrylate and other bisphenol A derivatives; dimethylol-tricyclodecane diacrylate and other diol diacrylates containing a ring structure; trimethylolpropane triacrylates, trimethylolpropane ethylene glycol adduct triacrylate, ditrimethylolpropane tetraacrylate, and other trimethylolpropane derivatives; 1,3,5-tris(2-acryloxyethyl) isocyanurate and other isocyanurate derivatives; pentaerythritol tetraacrylate, condensate of pentaerythritol and acrylic acid, pentaerythritol ethylene glycol adduct tetraacrylate, dipentaerythritol hexaacrylate, and other pentaerythritol derivatives; glycerin ethylene glycol adduct triacrylate and other glycerin derivatives; and mixtures of two or more types thereof.

Component (B3) is a non-siloxane compound containing in a molecule at least two epoxy groups. Note that the non-siloxane compound refers to a compound that does not have a siloxane bond (Si-O-Si) in a molecule, and specifically refers to a compound other than an organopolysiloxane containing an epoxy group. The molecular weight of component (B3) is not particularly restricted, and is preferably within a range of 200 to 2,000, within a range of 200 to 1,500, or within a range of 300 to 1,500. This is because when the molecular weight of component (B3) is equal to or greater than the lower limit of the aforementioned range, the volatility of component (B3) is reduced, and problems with odor are reduced, and on the other hand, when equal to or less than the upper limit of the aforementioned range, compatibility with regard to component (A) is enhanced.

Examples of component (B3) include: 1,4-butanediol diglycidyl ether, 1,6-hexanediol diglycidyl ether, bisphenol A diglycidyl ether, hydrogenated bisphenol A diglycidyl ether, neopentyl glycol diglycidyl ether, ethylene glycol diglycidyl ether, diethylene glycol diglycidyl ether, propylene glycol diglycidyl ether, polyethylene glycol diglycidyl ether, polypropylene glycol diglycidyl ether, and other both terminated diol diglycidyl ethers; glycerin diglycidyl ether, glycerin triglycidyl ether, diglycerol polyglycidyl ether, polyglyercol polyglydyl ether, and other glycerin derivatives; trimethylolpropane triglycidyl ether and other trimethylolpropane derivatives; diglycidyl 1,2-cyclohexane dicarboxylate, diglycidyl terephthalate, and other diglycidyl dicarboxylate esters; 4,4'-methylene bis (N,N-diglycidylaniline) and other glycidylanilines; pentaerythritol tetraglycidyl ether and other pentaerythritol derivatives; sorbitol polyglycidyl ether and other polyol polyglycidyl ethers; 3',4'-epoxycylcohexyl methyl-3,4-epoxycyclohexane carboxylate, tetra(3,4-epoxycyclohexyl methyl) butanetetracarboxylate modified ε-caprolactone, and other epoxycyclohexane derivative; 1,3,5-triglycidyl isocyanurate and other isocyanurate derivatives; and mixtures of two or more types thereof.

Component (B4) is a compound having in a molecule an epoxy group and at least one group selected from a group consisting of acryloyl groups and methacryloyl groups. The molecular weight of component (B4) is not particularly restricted, and is preferably within a range of 200 to 2,000, within a range of 200 to 1,500, or within a range of 300 to 1,500. This is because when the molecular weight of component (B4) is equal to or greater than the lower limit of the aforementioned range, the volatility of component (B4) is reduced, and problems with odor are reduced, and on the other hand, when equal to or less than the upper limit of the aforementioned range, compatibility with regard to component (A) is enhanced.

Examples of component (B4) include: 4-hydroxybutyl acrylate glycidyl ether and other acrylate diglycidyl ethers containing a hydroxyl group; 3,4-epoxycyclohexyl methyl acrylate and other alkyl esters containing an epoxy acrylate; and mixtures of two or more types thereof.

The content of component (B) is such that the total amount of functional groups in the component is within a range of 0.3 to 3 mols, and preferably within a range of 0.5 to 2 mols, or within a range of 0.8 to 1.5 mols, with regard to 1 mol of mercapto groups in component (A). This is because when the content of component (B) is equal to or greater than the lower limit of the aforementioned range, the obtained curable organopolysiloxane composition is sufficiently cured, and on the other hand, when equal to or less than the upper limit of the aforementioned range, the mechanical strength of the obtained cured product is enhanced.

Component (C) is a component for promoting curing of the present composition at a low temperature, and is an amine compound that does not have a N-H bond and/or a phosphone compound that does not have a P-H bond.

Examples of the amine compound include: triethylamine, tri-n-propylamine, tri-n-butylamine, tri-i-butylamine, tri-n-hexylamine, tri-n-octylamine, triphenylamine, N,N-dimethylaniline, N,N-diethylaniline, dimethyl cyclohexylamine, diethyl cyclohexylamine, 1-methylpiperidine, 4-hydroxy-1-methylpiperidine, 4-methylmorpholine, pyridine, 4-dimethylamine pyridine (DMAP), N,N'-dimethylpiperazine, 1,3,5-trimethyl hexahydro-1,3,5-triazine, 2,6-dimethyl-2,6-diazaheptane, 2,6,10-trimethyl-2,6,10-triazaundecane, bis(2-dimethylamino ethyl) ether, 1-(2-dimethylamino ethyl)-4-methylpiperazine, tris[2-(dimethylamino) ethyl] amine, 2,4,6-tris(dimethylamino methyl) phenol, and other noncyclic and cyclic tertiary amine compounds; 1,5-diazabicyclo [4.3.0] nonene (DBN), 1,8-diazabicyclo [5.4.0] undecene (DBU), 1,4-diazabicylco [2.2.2] octane (DABCO), quinuclidine, and other bicyclic tertiary amine compounds.

Furthermore, examples of the phosphine compound include triphenyl phosphine, triorthotolyl phosphine, triparatolyl phosphine, tris(paramethoxy phenyl) phosphine, diphenyl cyclohexyl phosphine, tricyclohexyl phosphine, triethyl phosphine, tripropyl phosphine, tri-n-butyl phospine, tri-t-butyl phosphine, tri-n-hexyl phosphine, and tri-n-octyl phosphine.

Component (C) is preferably a tertiary amine compound, and the compound may be used independently or two or more types may be mixed and then used. By appropriately selected component (C), the bath life of the curable organopolysiloxane composition of the present invention can be adjusted.

The amount of component (C) is within a range of 0.01 to 10 mass% with regard to the total amount of components (A) through (C). This is because when the amount of component (C) is equal to or greater than the lower limit of the aforementioned range, a curing reaction of the obtained composition is promoted, and on the other hand, when equal to or less than the upper limit of the aforementioned range, the obtained cured product is less prone to discoloring due to aging. With the present composition, the bath life of the present composition can be adjusted by appropriately adjusting the content of component (C).

The present composition can be provided for use in the absence of a solvent, but if forming a cured product as a thin film is desired, (D) an organic solvent may be included if necessary. The organic solvent is not particularly limited so long as the entire composition can uniformly dissolve without inhibiting curing of the present composition. The organic solvent preferably has a boiling point of 70 °C or higher and less than 200 °C, and specific examples include: i-propyl alcohol, t-butyl alcohol, cyclohexanol, ethyl acetate, propyl acetate, butyl acetate, cyclohexanone, methyl ethyl ketone, methyl isobutyl ketone, toluene, xylene, mesitylene, 1,4-dioxane, dibutyl ether, anisole, 4-methyl anisole, ethylbenzene, ethoxybenzene, ethylene glycol, ethylene glycol dimethyl ether, ethylene glycol diethyl ether, 2-methoxy ethanol (ethylene glycol monomethyl ether), diethylene glycol dimethyl ether, diethylene glycol monomethyl ether, 1-methoxy-2-propyl acetate, 1-ethoxy-2-propyl acetate, octamethyl cyclotetrasiloxane, hexamethyl disiloxane, and other non-halogen solvents; 1,1,2-trichloroethane, chlorobenzene, and other halogen solvents; and mixtures of two or more types thereof.

In the present composition, the amount of the organic solvent is not particularly restricted, but is preferably within a range of 0 to 3,000 parts by mass, or within a range of 0 to 1,000 parts by mass with regard to a total of 100 parts by mass of components (A) through (C).

The viscosity at 25 °C of the present composition is not particularly limited, but is preferably within a range of 10 to 100,000 mPa·s or within a range of 10 to 10,000 mPa·s. Furthermore, the organic solvent can be added to the present composition to adjust the viscosity to be within the aforementioned viscosity range.

So long as an object of the present invention is not impaired, fumed silica, crystalline silica, fused silica, wet silica, titanium oxide, zinc oxide, iron oxide, and other metal oxide fine powders; vinyl triethoxysilane, allyl trimethoxysilane, allyl triethoxysilane, 3-glycidoxypropyl trimethoxysilane, 3-methacryloxypropyl trimethoxysilane, and other adhesion imparting agents; nitrides, sulfides, and other inorganic fillers; pigments; heat resistance improving agents; and other conventionally known additives can be included in the present composition as a component not described above, if necessary.

The present composition can be adjusted by uniformly mixing components (A) through (C), and if necessary, other arbitrary components. When preparing the present composition, mixing at ambient temperature can be performed using various types of stirrers or mixers, and so long as the composition is not easily cured during mixing, mixing under heat may be performed. Furthermore, the blending order of the components is not particularly restricted, and the components can be mixed in any order.

Curing of the present composition proceeds even at a relatively low temperature of -5 to 30 °C. Note that curing can be promoted by heating. The time required for a curing reaction is dependent on the type of components (A) through (C), but is generally within 24 hours at a relatively low temperature.

The cured product of the present invention is obtained by curing the aforementioned curable organopolysiloxane composition. The shape of the cured product is not particularly limited, and examples include a sheet shape, a film shape, and tape shape.

The present composition can be coated onto a film substrate, tape substrate, or sheet substrate, and then cured at -5 to 30 °C to form a cured film on a surface of the substrate. The film thickness of the cured film is not particularly restricted, but is preferably within a range of 10 to 500 µm or within a range of 50 to 100 µm.

Curing proceeds even at a relatively low temperature, and therefore, the present composition can be applied to a coating of a substrate with inferior heat resistance. Examples of a coating method of the present composition include gravure coating, offset coating, offset gravure, roller coating, reverse roller coating, air knife coating, curtain coating, and comma coating. Furthermore, examples of the substrate type include paper, cardboard paper, clay coated paper, polyolefin laminate paper, and particularly polyethylene laminate paper, synthetic resin films/sheets/coating films, natural fibrous materials, synthetic fibrous materials, artificial leather materials, metal foils, metal sheets, and concrete. In particular, the synthetic resin films/sheets/coating films are preferred. In the case of a multilayer coating film, the present composition is generally coated onto a coating film containing an epoxy resin, acrylic resin, urethane resin, or the like.

### EXAMPLES

The curable organopolysiloxane composition, cured product thereof, and method of forming a cured film of the present invention will be described in detail using examples. In the formula, Me, Ph, Thi, Ac, and Ep respectively represent a methyl group, phenyl group, 3-mercaptopropyl group, 3-acryloxypropyl group, and 3-glycidoxypropyl group. Note that in the examples, viscosity, the weight average molecular weight, mercapto equivalent, acryloxy equivalent, and epoxy equivalent are measured as follows.

### [Viscosity]

A rotational viscometer VG-DA manufactured by Shibaura System Co., Ltd. was used to measure viscosity at 25 °C.

### [Weight Average Molecular Weight]

The weight average molecular weight calculated as standard polystyrene was determined by gel permeation chromatography using a RI detector.

### [Mercapto Equivalent, Acryloxy Equivalent, and Epoxy Equivalent]

The mercapto equivalent (g/mol), acryloxy equivalent (g/mol), and epoxy equivalent (g/mol) were determined from a structure identified by nuclear magnetic resonance spectroscopy.

### [Synthesis Example 1]

### Preparation of Mercapto Group-Containing Organopolysiloxane

1,374 g of 3-mercaptopropyl trimethoxysilane, 1,680 g of dimethyl dimethoxysilane, and 1.18 g of trifluoromethane sulfonic acid were prepared into a reactor having a stirring device, thermometer, reflux tube, and dripping funnel, and stirred. Then 882 g of ion exchanged water was dripped at room temperature. After stirring for one hour at methanol reflux temperature, calcium carbonate and cyclohexane were added, and the generated methanol and unreacted water were removed by azeotropic dehydration. The remaining low-boiling point materials were removed under reduced pressure, and then solid material was filtered to obtain a colorless transparent liquid with a viscosity of 560 mPa·s. The liquid had a weight

average molecular weight = 4,000, and mercapto equivalent = 260 g/mol, and was confirmed by ¹³C-nuclear magnetic resonance spectroscopy to be a mercapto group-containing organopolysiloxane represented by the average unit formula:

(Me₂SiO_{2/2})_{0.65}(ThiSiO_{3/2})_{0.35},

and the average composition formula:

Thi_{0.35}Me_{1.30}SiO_{1.18}.

### [Synthesis Example 2]

871 g of phenyl trimethoxysilane, 267 g of cyclic dimethylsiloxane, 1,406 g of 3-acryloyloxypropyl trimethoxysilane, 461 g of dimethylpolysiloxane blocked at both molecular chain terminal with trimethylsiloxane group and having a viscosity of 2 mm²/s at 25°C, 471 g of toluene, 1.7 g of 2,6-di-tert-butyl-p-cresol, and 1.7 g of trifluoromethane sulfonic acid were prepared into a reactor providing a stirring device, thermometer, reflux tube, and dripping funnel, and stirred. Then, 337 g of ion exchanged water was dripped at room temperature. After stirring for one hour under a methanol reflux, the generated methanol and unreacted water were removed by azeotropic dehydration. 0.37 g of a 11 N potassium hydroxide aqueous solution was further added, and azeotropic dehydration was continued. After stirring for four hours at a toluene reflux temperature, cooling was performed and 0.5 g of acetic acid was added. After filtering solid material, remaining low-boiling material was removed under reduced pressure to obtain a colorless transpraent liquid with a viscosity of 5,860 mPa·s. The liquid had a weight average molecular weight = 42,000, and acryloxy equivalent = 370 g/mol, and was confirmed by ¹³C-nuclear magnetic resonance spectroscopy to be an organopolysiloxane represented by the average unit formula:

(Me₃SiO_{1/2})_{0.12}(Me₂SiO_{2/2})_{0.36}(AcSiO_{3/2})_{0.30}(PhSiO_{3/2})_{0.22},

and the average composition formula:

Ac_{0.30}Me_{1.08}Ph_{0.22}SiO_{0.94}.

### [Practical Examples 1 to 9 and Comparative Examples 1 to 5]

Solvent-free type curable organopolysiloxane compositions were prepared in compositions shown in Table 1 and Table 2, using the following components. Note that in the curable organopolysiloxane composition, the amount was adjusted such that functional groups in component (B) were 1 mol with regard to 1 mol of mercapto group in component (A).

The following components were used as component (A).
(a-1): Mercapto group-containing organolpolysiloxane prepared in Synthesis Example 1

The following components were used as component (B).
(b-1): Polyfunctional acrylate (KAYARAD TMPTA manufactured by Nippon Kayaku Co., Ltd.)
(b-2): Neopentylglycol diglycidyl ether (manufactured by Tokyo Chemical Industry Co., Ltd.)
(b-3): Acryloxy group-containing organolpolysiloxane prepared in Synthesis Example 2
(b-4): 4-hydroxybutyl acrylate glycidyl ether (4HBAGE manufactured by Nippon Kayaku Co., Ltd.).

The following components were used as component (C).
(c-1): 2,6,10-trimethyl-2,6,10-triazaundecane
(c-2): 2,4,6-tris(dimethylaminomethyl) phenol
(c-3): 2,6-dimethyl-2,6-diazaheptane
(c-4): Toluene solution of 1,8-diazabicyclo [5,4,0] undecene (active component: 1 mass%)
(c-5): Dibutyltin dilaurate (Neostann U-100 manufactured by Nitto Kasei Co., Ltd.)

The curable organopolysiloxane composition was evaluated as follows.

### [Appearance]

The curable organopolysiloxane composition was prepared, and then the appearance thereof was visually observed.

### [Curability]

The curable organopolysiloxane composition was maintained at 25 °C in a glass bottle or on an aluminum dish, and whether or not fluidity is lost or the time until the composition ceased to adhere to a finger was determined (gelling time), and the curability was evaluated as follows.
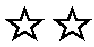 : Gelling time at 25 °C is within 8 hours
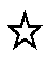 : Gelling time at 25 °C exceeds 8 hours, but is within 24 hours
Δ: Gelling time at 25 °C exceeds 24 hours, but is within 48 hours
×: Uncured even at 48 hours at 25 °C

The curability at -2°C was evaluated as follows for a composition cured within 24 hours at 25 °C.
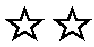 : Gelling time at -2 °C is within 8 hours
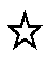 : Gelling time at -2 °C exceeds 8 hours, but is within 24 hours
Δ: Gelling time at -2 °C exceeds 24 hours, but is within 48 hours
×: Uncured even at 48 hours at -2 °C

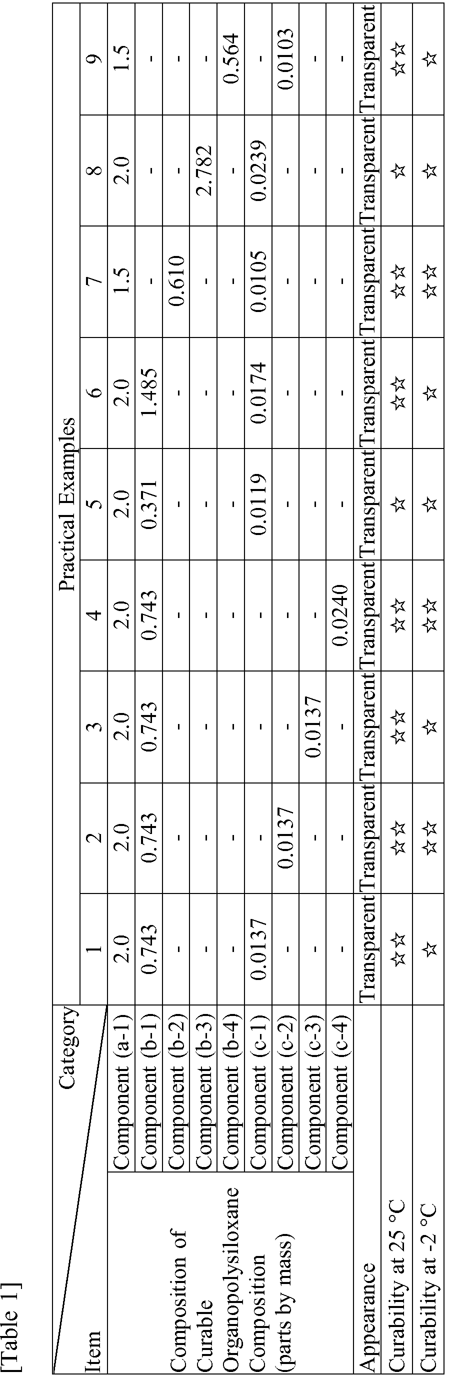

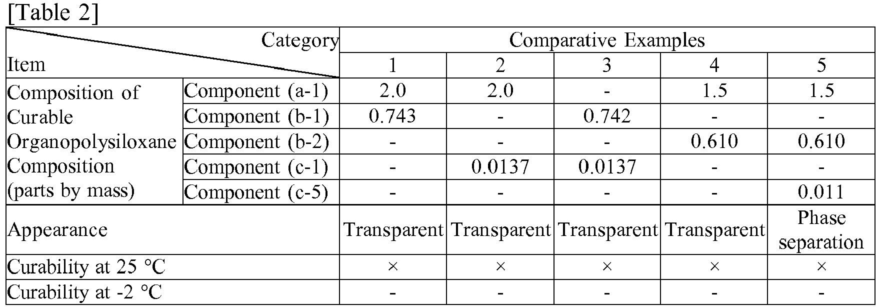

Based on the results in Table 1, in the curable organopolysiloxane composition of the present invention, curing at 25 °C was confirmed to be quick, and curing at -2 °C was also confirmed to be quick. On the other hand, based on the results in Table 2, curable organopolysiloxane compositions not containing any of components (A) through (C) were confirmed to not cure, cure significantly slower, or not uniformly cure due to phase separation.

### [Practical Examples 10 and 11]

Solvent type curable organopolysiloxane compositions were prepared at the formulations shown in Table 3, using the aforementioned components and following component. Note that in the curable organopolysiloxane composition, the amount was fixed such that the amount of functional groups in component (B) was 1 mol with regard to 1 mol of the mercapto group in component (A).

The following component was used as component (D).
(d-1): Ethyl acetate (manufactured Wako Pure Chemical Industries, Ltd.)

The curable organopolysiloxane composition was evaluated as follows.

### [Curability]

The curability of the curable organopolysiloxane composition was similarly evaluated as described above.

### [Bonding]

The curable organopolysiloxane composition was coated by flow coating onto a glass plate, drying and curing was performed for one day at room temperature, and then drying and curing were further performed for two hours at 70 °C. Bonding of the cure on the glass plate was evaluated by a cross-cut test (JIS K5400). As the results of the evaluation, "○" denotes a case where peeling of the cured film does not occur, and "×" denotes a case where peeling of the cured film occurs.

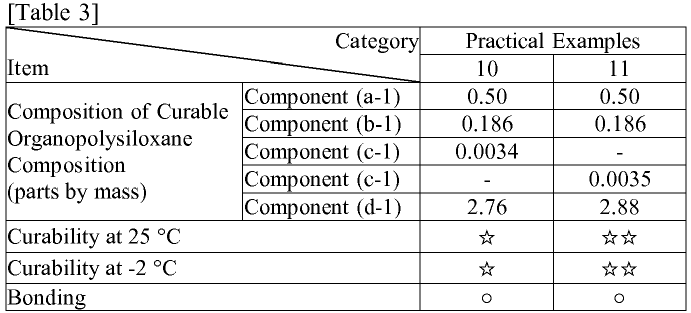

Based on the results in Table 3, with the curable organopolysiloxane compositions of the present invention, curing at -2 °C were confirmed to be quick, and bonding of the obtained cured films were also confirmed to be favorable.

### INDUSTRIAL APPLICABILITY

The curable organopolysiloxane composition of the present invention has favorable curability even at a relatively low temperature, and forms a cured film with excellent bonding with regard to an article to be coated, and therefore is preferred as a coating composition for coating an article to be coated with inferior heat resistance, or coating a structure on which heating means is difficult to use.

## Claims

1. A curable organopolysiloxane composition comprising:
(A) a mercapto group-containing organopolysiloxane represented by the average composition formula:
XₐR¹_{b}SiO_{(4-a-b)/2}
wherein, X represents at least one mercapto group selected from a group consisting of mercaptoalkyl groups and mercaptoaryl groups; R¹ represents a hydrogen atom, an alkyl group with 1 to 12 carbon atoms, an alkenyl group with 2 to 12 carbon atoms, an aryl group with 6 to 20 carbon atoms, an aralkyl group with 7 to 20 carbon atoms, a hydroxyl group, or an alkoxy group with 1 to 6 carbon atoms, however, at least two X are present in a molecule; and "a" and "b" are numbers satisfying: 0 < a < 1, 0 < b < 3, and 0.8 < a + b < 3;
(B) a compound having in a molecule at least two functional groups which are at least one type of groups selected from a group consisting of acryloyl groups, methacryloyl groups, and epoxy groups, and wherein the compound is at least one type of compound selected from a group consisting of the following components (B1) through (B4):
(B1) an organopolysiloxane represented by the average composition formula:
Y_{c}R²_{d}SiO_{(4-c-d)/2}
wherein, Y represents at least one group selected from a group consisting of acryloxyalkyl groups and methacryloxyalkyl groups; R² represents a hydrogen atom, an alkyl group with 1 to 12 carbon atoms, an alkenyl group with 2 to 12 carbon atoms, an aryl group with 6 to 20 carbon atoms, an aralkyl group with 7 to 20 carbon atoms, a hydroxyl group, or an alkoxy group with 1 to 6 carbon atoms, however, at least two Y are present in a molecule; and "c" and "d" are numbers satisfying: 0 < c < 1, 0 < d < 3, and 0.8 < c + d < 3,
(B2) a non-siloxane compound containing in a molecule at least two groups which are at least one type of groups selected from a group consisting of acryloyl groups and methacryloyl groups,
(B3) a non-siloxane compound containing in a molecule at least two epoxy groups, and
(B4) a compound having in a molecule an epoxy group and at least one group selected from a group consisting of acryloyl groups and methacryloyl groups,
in an amount of the functional groups in component (B) is 0.3 to 3 mols with regard to 1 mol of the mercapto groups in component (A); and
(C) an amine compound that does not contain a N-H bond and/or a phosphine compound that does not have a P-H bond, in an amount of 0.01 to 10 mass% with regard to the total amount of components (A) through (C).

2. The curable organopolysiloxane composition according to claim 1, wherein component (C) is a tertiary amine compound.

3. The curable organopolysiloxane composition according to claim 1 or 2, further comprising:
(D) an organic solvent, in an amount of 0 to 3,000 parts by mass with regard to a total 100 parts by mass of components (A) through (C).

4. The curable organopolysiloxane composition according to any one of claims 1 through 3, which is a coating composition.

5. A cured product obtained by curing the curable organopolysiloxane composition according to any one of claims 1 to 3.

6. A method of forming a cured film, comprising the steps of:
coating the curable organopolysiloxane composition according to claim 4 onto an article to be coated; and
curing at -5 to 30 °C.
